# EUROPÄISCHE PATENTANMELDUNG

(11) **EP 1 044 770 A1**
(43) Veröffentlichungstag der Anmeldung: **18.10.2000**
(21) Anmeldenummer: 00108153.8
(22) Anmeldetag: 13.04.2000
(51) Int. Cl.: B26D 7/30, B26D 7/06, G01B 11/24

(54) **Verfahren und Vorrichtung zum Trennen einzelner Teilstücke vorgebbaren Gewichts von einem geräucherten Schinkenstück**

(30) Priorität: 15.04.1999 EP 99107568
(71) Anmelder: Hermann Wein GmbH & Co. KG, Schwarzwäder Schinkenräucherei, 72250 Freudenstadt-Musbach (DE)
(72) Erfinder: Kappler, Eberhard, 72250 Freudenstadt-Musbach (DE)
(74) Vertreter: Patentanwälte Westphal, Mussgnug & Partner

(57) **Zusammenfassung**

Ein Verfahren und eine Vorrichtung zum Trennen einzelner Teilstücke (2) vorgebbaren Gewichtes von einem geräucherten Schinkenstück (1) sieht zur Erzeugung eines dreidimensionalen Bildes des Schinkenstücks (1) oberhalb des Schinkenstücks (1) mindestens drei Kameras (3) und drei Projektoren (4) und unterhalb mindestens eine Kamera (3) und einen Projektor (4) vor. Aus dem mittels einer Waage (14) ermittelten Gewicht und dem dreidimensionalen Bild berechnet ein Computer (5) die Dichte des Schinkenstücks (1) und steuert eine Trennvorrichtung (16, 17, 18) so, dass vom Schinkenstück (1) Teilstücke (2) vorgebbaren Gewichtes getrennt werden. Eine Kontrollkamera (19) tastet die Schnittfläche ab, um den Mager- und den Fettanteil festzustellen, aus denen der Computer (5) die Dichte des Schinkenstücks (1) oder einen Korrekturfaktor für die bereits berechnete Dichte ableitet. Eine Kontrollwaage (15) prüft das Gewicht der Teilstücke (2). Eine vom Computer (5) gesteuerte Sortiervorrichtung (22) sondert Teilstücke (2) aus, deren Gewicht nicht in einem vorgebbaren Toleranzbereich liegt.

## Beschreibung

Die Erfindung betrifft ein Verfahren zum Trennen einzelner Teilstücke vorgebbaren Gewichtes von einem geräucherten Schinkenstück,
- bei dem mittels mehrerer Kameras und Projektoren ein dreidimensionales Bild des in Teilstücke zu zerteilenden Schinkenstückes erzeugt wird,
- bei dem ein Computer aus der Dichte und mittels dem von den Kameras gelieferten dreidimensionalen Bild des zu zerteilenden Schinkenstückes die Trennabstandswerte bzw. die Dicken der Teilstücke berechnet,
- bei dem der Computer eine Trennvorrichtung zum Trennen der Teilstücke vorgebbaren Gewichtes vom Schinkenstück steuert und
- bei dem der Computer eine Fördereinrichtung steuert, die das zu zerteilende Schinkenstück auf einen Auflagetisch befördert.

Die Erfindung betrifft weiter eine Vorrichtung zum Trennen einzelner Teilstücke vorgebbaren Gewichtes von einem geräucherten Schinkenstück
- mit mehreren Kameras und Projektoren zur Erzeugung eines dreidimensionalen Bildes des in Teilstücke zu zerteilenden Schinkenstücks,
- mit einem Computer zur Berechnung der Trennabstandswerte bzw. der Dicken der Teilstücke aufgrund der Dichte und des von den Kameras gelieferten dreidimensionalen Bildes des Schinkenstücks und
- mit einer vom Computer gesteuerten Trennvorrichtung zum Trennen der Teilstücke vom Schinkenstück.

Aus WO 89/08983 sind ein Verfahren und eine Vorrichtung zum Trennen einzelner Teilstücke vorgebbaren Gewichtes von einem Stück eines Nahrungsmittels, zum Beispiel ein Fischfilet, bekannt.

Das zu zerteilende Stück wird mittels eines Förderbandes unter eine Kamera befördert, die das Stück abtastet und Messwerte an einen Computer liefert, der eine Schneidvorrichtung so steuert, dass ein Teilstück vorgebbaren Gewichtes vom gesamten Stück getrennt wird. Eine Ausgestaltung dieser bekannten Vorrichtung sieht vor, dass nach dem ersten Trennvorgang das Teilstück von einer zweiten Kamera abgetastet wird, um die Fettanteile des Teilstückes zu orten. Der Computer steuert aufgrund der von der zweiten Kamera gelieferten Messwerte eine zweite Trennvorrichtung so, dass die Fettanteile vom Teilstück abgeschnitten werden.

Dieses bekannte Verfahren und diese bekannte Vorrichtung sind jedoch nicht dafür geeignet, von einem geräucherten Schinkenstück Teilstücke vorgebbaren Gewichtes zu schneiden. Das Abtasten eines geräucherten Schinkenstückes mittels einer Kamera gestaltet sich sehr schwierig, weil die Oberfläche eines Stücks geräucherten Schinkens mit Russ geschwärzt ist und weil Schinkenstücke Hinterschneidungen aufweisen. Das Gewicht der von derart messtechnisch schwer zu erfassenden Objekten, wie z. B. eben geräucherte Schinkenstücke, abgetrennten Teilstücke, streut in einem so großen Umfang, dass die für Lebensmittel vorgeschriebene Toleranz weit überschritten wird.

Es ist daher Aufgabe der Erfindung, ein Verfahren und eine Vorrichtung zum Trennen einzelner Teilstücke vorgebbaren Gewichtes von einem geräucherten Schinkenstück so zu gestalten, dass das vorgebbare Gewicht möglichst genau erzielt wird.

Verfahrensmäßig wird diese Aufgabe mit den im Anspruch 1 angegebenen Merkmalen dadurch gelöst, dass mindestens zwei oberhalb des Auflagetisches angeordnete Kameras und mindestens zwei Projektoren sowie mindestens eine unterhalb des Auflagetisches angeordnete Kamera und mindestens ein unterhalb des Auflagetisches angeordneter Projektor auf das zu zerteilende Schinkenstück gerichtet werden.

Vorrichtungsmäßig wird diese Aufgabe mit den im Anspruch 11 angegebenen Merkmalen dadurch gelöst, dass oberhalb des Auflagetisches mindestens zwei Kameras und zwei Projektoren und unterhalb des Auflagetisches mindestens eine Kamera und ein Projektor angeordnet sind und dass alle Kameras und Projektoren auf das auf dem Auflagetisch liegende und in Teilstücke zu zerteilende Schinkenstück gerichtet sind.

Das erfindungsgemäße Verfahren sieht vor, das zu zerteilende geräucherte Schinkenstück von oben mit mindestens zwei Kameras abzutasten und mit mindestens zwei Projektoren anzustrahlen sowie von unten mit mindestens einer Kamera abzutasten und mit mindestens einem Projektor anzustrahlen. Aus den von den Kameras gelieferten Messdaten erstellt ein Computer ein dreidimensionales Bild des Schinkenstücks, das so genau ist, dass das Gewicht der abgeschnittenen Teilstücke innerhalb der vorgegebenen Toleranz liegt. Mit dem erfindungsgemäßen Verfahren, das Schinkenstück von oben mittels zweier Kameras und von unten mittels einer Kamera abzutasten, werden Hinterschneidungen ausreichend genau erfasst und ausgewertet.

Besonders vorteilhaft ist es, das zu zerteilende Schinkenstück von oben und von unten mittels jeweils zwei Kameras abzutasten und mitttels jeweils zwei Projektoren anzustrahlen. Das Gewicht von etwa 87 % der Teilstücke liegt in dem gemäß der Lebensmittelverpackungsordnung vorgeschriebenen Toleranzbereich von 3 %, der es erlaubt, die Teilstücke ohne Etikettierung, ohne Preis- und ohne Gewichtsangabe zu verpacken.

Der Computer berechnet nun aufgrund des von den Kameras gelieferten dreidimensionalen Bildes und des mittels einer Waage ermittelten Gewichtes des Schinkenstücks dessen Dichte. Aus dessen Dichte und mittels des dreidimensionalen Bildes errechnet der Computer die Trennabstandswerte bzw. die Dicken der Teilstücke mit dem vorgegebenen Gewicht.

Alternativ hierzu kann die Dichte des Schinkenstücks auch in den Computer eingegeben werden.

Eine vorteilhafte Weiterbildung des erfindungsgemäßen Verfahrens sieht vor, die Schnittflächen des zu zerteilenden Schinkenstücks oder der Teilstücke von einer Kontollkamera abzutasten, um die Fett- und Mageranteile der Schnittfläche bestimmen zu können. Aus den von der Kontrollkamera gelieferten Messwerten berechnet der Computer die Dichte des Schinkenstücks oder errechnet einen Korrekturfaktor, mit dem er die zuvor aus dem mittels der Waage bestimmten Gewicht und mittels des von den Kameras gelieferten dreidimensionalen Bildes ermittelte Dichte korrigiert.

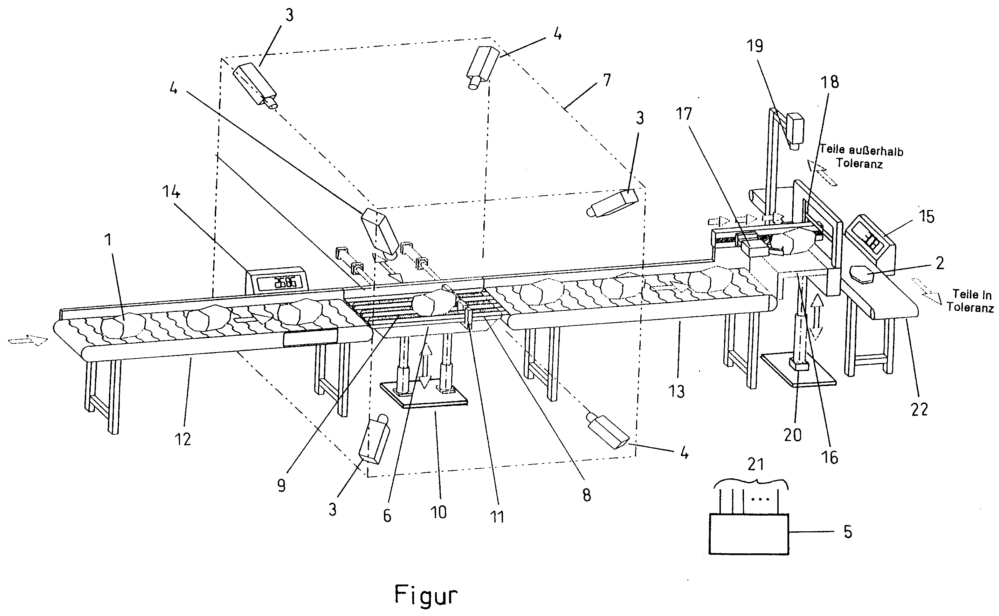

Anhand des in der Figur gezeigten Ausführungsbeispieles der erfindungsgemäßen Vorrichtung werden das erfindungsgemäße Verfahren und die erfindungsgemäße Vorrichtung näher beschrieben und erläutert.

In der Figur ist das Ausführungsbeispiel in perspektivischer Darstellung gezeigt.

An ein Förderband 12, an dem eine Waage 14 angeordnet ist, schließt sich ein Auflagetisch 6 an, an den sich ein Förderband 13 anschließt, auf das ein Schneidetisch 16 folgt. Hinter dem Schneidetisch 16 ist eine als Sortierband 22 aufgeführte Sartiervorrichtung mit einer Kontrollwaage 15 angeordnet.

Der Auflagetisch 6 ist aus in Längsrichtung verlaufenden Fäden 8 aufgebaut. Anstelle von Fäden können auch Stäbe, Streifen oder Bänder vorgesehen sein. Beispielsweise kann der Auflagetisch 6 austauschbar gestaltet sein, um je nach Beschaffenheit der Schinkenstücke die jeweils optimale Auflage, z. B. Fäden, Stäbe, Streifen oder Bänder, einsetzen zu können. In jedem zweiten Zwischenraum zwischen den Fäden 8 ist ein schmales Förderband 9 angeordnet, das mittels einer Hubvorrichtung 10 absenkbar ist. In die noch frei bleibenden weiteren zweiten Zwischenräume ragen die Zinken eines drehbaren kammförmigen Anschlages. Über dem Auflagetisch 6 sind an den Eckpunkten eines virtuellen Quaders oder Würfels oder eines realen würfelförmigen oder quaderförmigen Rahmens 7 zwei Kameras 3 und zwei Projektoren 4 zur Abtastung eines auf dem Auflagetisch 6 liegenden Schinkenstücks 1 angeordnet. Unterhalb des Auflagetisches 6 sind zur Abtastung des Schinkenstücks 1 ebenfalls an den Eckpunkten des virtuellen Würfels oder Quaders bzw. des realen Rahmens 7 zwei Kameras 3 und zwei Projektoren 4 angeordnet.

Vorzugsweise ist der Rahmen 7 zur Befestigung der Kameras 3 und der Projektoren 4 aus Edelstahl hergestellt und mit einer Verkleidung versehen, um eine Verfälschung der Messergebnisse durch Fremdlichteinfall zu vermeiden und um die Kameras und die Projektoren vor der durch die Schinkenstücke verursachten salzhaltigen Luft weitgehend zu schützen. Der Übersichtlichkeit wegen ist die Verkleidung in der Figur nicht gezeichnet.

Am Schneidetisch 16 ist ein Greifer 17 angeordnet, um das zu zerteilende Schinkenstück 1 zu greifen und einem Schneidemesser 18 zuzuführen. Über dem Schneidetisch 16 ist eine Kontrollkamera 19 angeordnet, welche die Schnittflächen des Schinkenstücks 1 oder der Teilstücke 2 abtastet.

Der Computer 5, der die gesamte Anlage steuert, ist mit den Förderbändern, den Waagen, den Hubvorrichtungen, dem drehbaren Anschlag, den Kameras und den Projektoren, dem Greifer und dem Schneidemesser über Mess- und Steuerleitungen 21 verbunden. Die Kameras und Projektoren werden vom Computer kalibriert.

Auf einem Bildschirm werden die einzelnen Stationen der Verarbeitung der Schinkenstücke schematisch dargestellt, so dass jederzeit kontrolliert werden kann, wo sich ein Schinkenstück befindet und wo Störungen auftreten und welcher Art sie sind.

Es wird nun das erfindungsgemäße Verfahren beispielhaft anhand der in der Figur gezeigten Vorrichtung erläutert.

Die in Teilstücke vorgebbaren Gewichtes zu zerteilenden geräuchterten Schinkenstücke 1 werden von dem Förderband 12, auf dem sie mittels der Waage 14 gewogen werden, zum Auflagetisch 6 befördert. Das von der Waage 14 für jedes Schinkenstück 1 ermittelte Gewicht wird über Messleitungen 21 zum Computer 5 übertragen. Ein vom Förderband 12 auf die schmalen Förderbänder des Auflagetisches 6 übergebenes Schinkenstück 1 wird von den schmalen Förderbändern bis zum drehbaren kammförmigen Anschlag 11 befördert, der so gedreht ist, dass seine Zinken durch die Zwischenräume nach oben ragen und das Schinkenstück 1 anhalten. Der Computer 5 steuert nun über Steuerleitungen 21 die Hubvorrichtung 10, welche die schmalen Förderbänder absenkt. Ausserdem dreht der Computer 5 den kammförmigen Anschlag 11 so, dass die Kämme in den Zwischenräumen versenkt werden. Das Schinkenstück 1 liegt nun nur noch auf den Fäden 8 auf. Der Computer 5 aktiviert nun die Kameras 3 und die Projektoren 4, welche das Schinkenstück 1 abtasten und ihre Messwerte zum Computer 5 liefern, der nun aus diesen Messwerten ein dreidimensionales Bild des Schinkenstückes erstellt. Aus diesem dreidimensionalen Bild und dem von der Waage 14 gelieferten Gewicht des Schinkenstücks 1 berechnet der Computer 5 nun die Dichte dieses Schinkenstücks. Anschließend werden die schmalen Förderbänder wieder angehoben, um das Schinkenstück weiter zum nächsten Förderband 13 zu befördern, das es weiter zum Schneidetisch 16 befördert, wo es vom Greifer 17 erfasst und zum Schneidemesser 18 geschoben wird. Der Computer steuert nun die Vorwärtsbewegung des Greifers 17 und die Schneidebewegung des Schneidemessers 18, um Teilstücke mit dem vorgegebenen Gewicht vom gesamten Schinkenstück 1 abzuschneiden. Hierzu wird der Schneidetisch 16 mittels der Hubvorrichtung 20 angehoben, die ebenfalls über Steuerleitungen 21 vom Computer 5 gesteuert wird. Hinter dem Schneidetisch ist ein als Förderband ausgebildetes Sortierband 22 angeordnet, auf das die abgeschnittenen Teilstücke 2 fallen. Auf dem Sortierband 22 werden die abgeschnittenen Teilstücke 2 von einer Kontrollwaage 15 gewogen, die das Messergebnis über Messleitungen 21 an den Computer 5 übermittelt. Teilstücke 2, deren Gewicht nicht im vorgegebenen Toleranzbereich liegt, werden vom Sortierband 22 aussortiert, indem der Computer das Sortierband 22 in die eine Drehrichtung oder in die andere Drehrichtung bewegt. Der Ausschuss fällt dann beispielsweise am rechten Ende des Sortierbandes 22 in einen Behälter, während die Teilstücke 2 mit dem korrekten Gewicht am linken Ende des Sortierbandes 22 in einen anderen Behälter fallen. Der Übersichtlichkeit wegen sind diese beiden Behälter nicht in der Figur gezeigt.

Über dem Schneidetisch 16 ist eine ebenfalls vom Computer 5 gesteuerte Kontrollkamera 19 angeordnet, welche die Schnittfläche am Schinkenstück 1 oder an den Teilstücken 2 abtastet, um den Fettanteil und den Mageranteil bestimmen zu können. Die von der Kontrollkamera 19 ermittelten Messwerte werden über Messleitungen 21 zum Computer 5 übertragen, der sie auswertet und aus ihnen die Dichte des Schinkenstücks ermittelt oder aus ihnen einen Korrekturfaktor errechnet, um die bereits aus den von der Waage 14 gelieferten Messwerten und dem dreidimensionalen Bild ermittelte Dichte zu korrigieren.

Vorteilhaft ist es, einen vom Computer 5 gesteuerten Antrieb für den Rahmen 7 vorzusehen, der den Rahmen 7 in Richtung der drei Raumachsen bewegt und um die drei Raumachsen dreht, um ein auf dem Auflagetisch 6 liegendes Schinkenstück 1 genauer mit den Kameras 3 abtasten und um insbesondere Hinterschneidungen besser erfassen zu können.

Die Trennvorrichtung der erfindungsgemäßen Vorrichtung ist nicht auf ein Schneidemesser als Trennmittel zur Trennung der Teilstücke vom gesamten Stück beschränkt. Vielmehr ist die Erfindung für alle in der Lebensmittelverarbeitung zugelassenen Trennmittel geeignet.

Ebenso wenig ist die Erfindung auf die Anzahl von drei Kameras und Projektoren beschränkt. Selbstverständlich können auch mehr, vorzugsweise vier, Kameras und Projektoren vorgesehen sein. Die Kameras und Projektoren müssen nicht zwangsläufig an den Eckpunkten eines virtuellen oder realen Würfels oder Quaders angeordnet sein. Die Kameras und Projektoren können auch an anderen geeigneten Orten befestigt sein.

Wie bereits erwähnt lassen sich die einzelnen Stationen der Verarbeitung der Schinkenstücke auf einem Monitor kontrollieren. Jeder Verarbeitungschritt wird am Monitor angezeigt. Die Programme des Computers, der die gesamte Vorrichtung steuert, sind vorzugsweise geschwindigkeitsoptimiert. Die Sollverarbeitungszeit beträgt etwa 20 Sekunden für die Zerteilung eines Schinkenstücks in Teilstücke vorgebbaren Gewichtes. Die Schinkenstücke werden zum Beispiel in Gruppen mit gestaffelter Dichte eingeteilt, was den Verarbeitungsprozess beschleunigt.

Besonders vorteilhaft ist es, mittels des Computers eine Statistik zu erstellen, die zum Beispiel die Anzahl der insgesamt verarbeiteten Schinkenstücke, der Teilstücke, der Randstücke, der Teilstücke mit korrektem und mit ausserhalb des Toleranzbereiches liegendem Gewicht, die Tagesproduktion, die Wochenproduktion, den Ausschuss usw. angibt.

Obwohl die Oberfläche geräucherter Schinkenstücke mit schwarzem Russ bedeckt ist und Hinterschneidungen aufweist, lassen sich durch Anwendung des erfindungsgemäßen Verfahrens bei einer erfindungsgemäßen Vorrichtung Teilstücke vorgebbaren Gewichtes mit großer Genauigkeit von den Schinkenstücken abtrennen. Aufgrund dieser großen Genauigkeit sind sowohl das erfindungsgemäße Verfahren als auch die erfindungsgemäße Vorrichtung zum Zerschneiden anderer Lebensmittel als Schinkenstücke in Teilstücke vorgebbaren Gewichtes geeignet.

### Bezugszeichenliste

- 1: Schinkenstück
- 2: Teilstück
- 3: Kamera
- 4: Projektor
- 5: Computer
- 6: Auflagetisch
- 7: Rahmen
- 8: Faden
- 9: schmales Förderband
- 10: Hubvorrichtung
- 11: drehbarer kammförmiger Anschlag
- 12: Förderband
- 13: Förderband
- 14: Waage
- 15: Kontrollwaage
- 16: Schneidetisch
- 17: Greifer
- 18: Schneidemesser
- 19: Kontrollkamera
- 20: Hubvorrichtung
- 21: Messleitung, Steuerleitung
- 22: Sortierband

## Patentansprüche

1. Verfahren zum Trennen einzelner Teilstücke (2) vorgebbaren Gewichtes von einem geräucherten Schinkenstück (1),
- bei dem mittels mehrerer Kameras (3) und Projektoren (4) ein dreidimensionales Bild des in Teilstücke (2) zu zerteilenden Schinkenstückes (1) erzeugt wird,
- bei dem ein Computer (5) aus der Dichte und dem von den Kameras (3) gelieferten dreidimensionalen Bild des zu zerteilenden Schinkenstückes (1) die Trennabstandswerte bzw. die Dicken der Teilstücke (2) berechnet,
- bei dem der Computer (5) eine Trennvorrichtung zum Abtrennen der Teilstücke (2) vorgebbaren Gewichtes vom Schinkenstück (1) steuert und
- bei dem der Computer (5) eine Fördereinrichtung steuert, die das zu zerlegende Schinkenstück (1) auf einen Auflagetisch (6) befördert,
**dadurch gekennzeichnet,** dass mindestens zwei oberhalb des Auflagetisches (6) angeordnete Kameras (3) und Projektoren (4) sowie mindestens eine unterhalb des Auflagetisches (6) angeordnete Kamera (3) und mindestens ein unterhalb des Auflagetisches (6) angeordneter Projektor (4) auf das zu zerteilende Schinkenstück (1) gerichtet werden.

2. Verfahren nach Anspruch 1,
**dadurch gekennzeichnet,** dass unterhalb des Auflagetisches (6) zwei Kameras (3) und zwei Projektoren (4) angeordnet sind.

3. Verfahren nach Anspruch 1 oder 2,
**dadurch gekennzeichnet,** dass die Dichte des Schinkenstücks (1) aufgrund seines dreidimensionalen Bildes und seines mittels einer Waage (14) erfassten Gewichtes vom Computer (5) berechnet wird.

4. Verfahren nach Anspruch 3,
**dadurch gekennzeichnet,** dass eine Kontrollkamera (19) die Schnittfläche des zu zerteilenden Schinkenstücks (1) oder der Teilstücke (2) abtastet und dass der Computer (5) aus dem Fett- und dem Mageranteil der Schnittflächen die Dichte des Schinkenstücks berechnet oder die bereits berechnete Dichte korrigiert.

5. Verfahren nach Anspruch 1, 2, 3 oder 4,
**dadurch gekennzeichnet,** dass die Dichte des zu zerteilenden Schinkenstücks in den Computer (5) eingegeben wird.

6. Verfahren nach Anspruch 1, 2, 3, 4 oder 5,
**dadurch gekennzeichnet,** dass der Auflagetisch (6) aus längs verlaufenden Fäden (8) oder Stäben und mehreren schmalen Förderbändern aufgebaut ist und dass zum Erstellen des dreidimensionalen Bildes des zu zerteilenden Schinkenstücks mittels der Kameras (3) die schmalen Förderbänder (8) vom Computer (5) gesteuert abgesenkt werden, so dass das zu zerteilende Schinkenstück (1) auf den Fäden (8) oder Stäben aufliegt.

7. Verfahren nach Anspruch 6,
**dadurch gekennzeichnet,** dass ein drehbarer kammförmiger Anschlag (11), dessen Zinken durch die verbleibenden Zwischenräume des Auflagetisches (6) ragen, vom Computer (5) gesteuert wird, um das zu zerteilende Schinkenstück (1) an einer definierten Stelle anzuhalten und wieder freizugeben.

8. Verfahren nach Anspruch 6 oder 7,
**dadurch gekennzeichnet,** dass die schmalen Förderbänder (9) vom Computer (5) gesteuert werden.

9. Verfahren nach einem der vorangehenden Ansprüche 1 bis 8,
**dadurch gekennzeichnet,** dass ein erstes Förderband (12), an das sich der Auflagetisch (6) mit den schmalen Förderbändern (9) anschließt und ein anschließendes zweites Förderband (13) vom Computer (5) gesteuert werden.

10. Verfahren nach Anspruch 9,
**dadurch gekennzeichnet,** dass die an das zweite Förderband (13) anschließende Trennvorrichtung aus einem absenkbaren und anhebbaren Schneidetisch (16), einem Greifer (17) zum Greifen des zu zerteilenden Schinkenstückes (1) und einem Schneidemesser (18) aufgebaut ist und dass der Greifer (17), das Schneidemesser (18) und die Hubbewegung des Schneidetisches (16) vom Computer (5) gesteuert werden.

11. Verfahren nach einem der vorangehenden Ansprüche 1 bis 10,
**dadurch gekennzeichnet,** dass eine Kontrollwaage (15) das Gewicht der Teilstücke (2) bestimmt und dass eine Sortiervorrichtung (22) Teilstücke (2) aussortiert, deren Gewicht nicht innerhalb einer vorgebbaren Toleranz liegt.

12. Vorrichtung zum Trennen einzelner Teilstücke (2) vorgebbaren Gewichtes von einem geräucherten Schinkenstück (1)
- mit mehreren Kameras (3) und Projektoren (4) zur Erzeugung eines dreidimensionalen Bildes des in Teilstücke (2) zu zerteilenden Schinkenstücks (1),
- mit einem Computer (5) zur Berechnung der Trennabstandswerte bzw. Dicken der Teilstücke (2) aufgrund der Dichte und des von den Kameras (3) gelieferten dreidimensionalen Bildes des Schinkenstücks (1),
- mit einer vom Computer (5) gesteuerten Trennvorrichtung zum Trennen der Teilstücke (2) vom Schinkenstück (1) und
- mit einer Fördereinrichtung, um das zu zerteilende Schinkenstück (1) auf einen Auflagetisch (6) zu befördern,
**dadurch gekennzeichnet,** dass oberhalb des Auflagetisches (6) mindestens zwei Kameras (3) und mindestens zwei Projektoren (4) und unterhalb des Auflagetisches (6) mindestens eine Kamera (3) und mindestens ein Projektor (4) angeordnet sind und dass alle Kameras (3) und alle Projektoren (4) auf das auf dem Auflagetisch (6) liegende und in Teilstücke zu zerteilende Schinkenstück (1) gerichtet sind.

13. Vorrichtung nach Anspruch 12,
**dadurch gekennzeichnet,** dass unterhalb des Auflagetisches (6) zwei Kameras (3) und zwei Projektoren (4) angeordnet sind.

14. Vorrichtung nach Anspruch 13,
**dadurch gekennzeichnet,** dass sich der Auflagetisch (6) etwa im Zentrum eines virtuellen Würfels oder Quaders befindet, an dessen über der Tischauflage angeordneten virtuellen vier Ecken zwei Kameras (3) und zwei Projektoren (4) und an dessen unter dem Auflagetisch (6) angeordneten virtuellen vier Ecken zwei Kameras (3) und zwei Projektoren (4) angeordnet sind.

15. Vorrichtung nach Anspruch 14,
**dadurch gekennzeichnet,** dass die Kameras (3) und die Projektoren (4) an den Ecken eines würfel- oder quaderförmigen Rahmens (7) befestigt sind.

16. Vorrichtung nach Anspruch 15,
**dadurch gekennzeichnet,** dass der Rahmen (7) mit den Kameras (3) und den Projektoren (4) mittels eines Antriebs parallel zu den drei Raumachsen bewegbar und um die drei Raumachsen drehbar ist.

17. Vorrichtung nach Anspruch 12, 13, 14, 15 oder 16,
**dadurch gekennzeichnet,** dass der Auflagetisch (6) aus längs verlaufenden Fäden (8), Stäben, Streifen oder Bändern mit Zwischenräumen aufgebaut ist.

18. Vorrichtung nach Anspruch 17,
**dadurch gekennzeichnet,** dass in jedem zweiten Zwischenraum des Auflagetisches (6) ein längs verlaufendes schmales Förderband (9) angeordnet ist.

19. Vorrichtung nach Anspruch 18,
**dadurch gekennzeichnet,** dass die in den Zwischenräumen angeordneten schmalen Förderbänder (9) mittels einer ersten Hubvorrichtung (10) absenkbar und anhebbar sind.

20. Vorrichtung nach einem der Ansprüche 12 bis 19,
**dadurch gekennzeichnet,** dass ein kammförmiger drehbarer Anschlag (11) vorgesehen ist, dessen Kämme aus den freien Zwischenräumen des Auflagetisches (6) ragen und durch Drehen des Anschlage (11) in oder unter den Zwischenräumen versenkbar sind.

21. Vorrichtung nach einem der vorangehenden Ansprüche 12 bis 19,
**dadurch gekennzeichnet,** dass sich an ein erstes Förderband (12) zur Beförderung des in Teilstücke (2) zu zerteilenden Schinkenstücke (1) der Auflagetisch (6) anschließt, auf den ein zweites Förderband (14) folgt, an dessen Ende sich die Trennvorrichtung befindet.

22. Vorrichtung nach Anspruch 21,
**dadurch gekennzeichnet,** dass am ersten Förderband (12) oder am zweiten Förderband (13) oder am Auflagetisch (6) eine Waage (14) zur Bestimmung des Gewichts des zu zerlegenden Schinkenstücks (1) vorgesehen ist.

23. Vorrichtung nach einem der Ansprüche 12 bis 22,
**dadurch gekennzeichnet,** dass die Trennvorrichtung aus einem Schneidetisch (16) und einem am Schneidetische (16) angeordneten bewegbaren Greifer (17) zur Beförderung des in Teilstücke (2) zu zerteilenden Schinkenstücks (1) zu einem Schneidemesser (18) aufgebaut ist.

24. Vorrichtung nach Anspruch 23,
**dadurch gekennzeichnet,** dass am Schneidetisch (16) eine mit dem Computer (5) verbundene Kontrollkamera (19) zur Abtastung der Schnittfläche des Schinkenstücks (1) oder der Teilstücke (2) angeordnet ist.

25. Vorrichtung nach einem der Ansprüche 12 bis 24,
**dadurch gekennzeichnet,** dass hinter der Trennvorrichtung eine Kontrollwaage (15) zur Prüfung des Gewichtes der Teilstücke (2) und eine Sortiervorrichtung (22) zum Aussortieren von Teilstücken angeordnet sind, deren Gewicht nicht innerhalb einer vorgebbaren Toleranz liegt.

26. Vorrichtung nach Anspruch 25,
**dadurch gekennzeichnet,** dass die Sortiervorrichtung aus einem Sortierband (22) besteht, dessen Drehrichtung zur Aussortierung der Teilstücke vom Computer (5) steuerbar ist.

27. Vorrichtung nach Anspruch 23, 25 oder 26,
**dadurch gekennzeichnet,** dass zum Heben und Senken des Schneidetisches (16) eine zweite Hubvorrichtung (20) vorgesehen ist.

28. Vorrichtung nach einem der Ansprüche 12 bis 27,
**dadurch gekennzeichnet,** dass der Computer (5) über Mess- und Steuerleitungen (21) mit den Kameras (3), den Projektoren (4), den Waagen (14, 15), den Förderbändern (12, 13, 22), den Hubvorrichtungen (10, 20), dem drehbaren Anschlag (11), dem Greifer (17), dem Schneidemesser (18) und dem Antrieb für den Rahmen (7) mit den Kameras (3) und den Projektoren (4) verbunden ist.
